# EUROPÄISCHE PATENTSCHRIFT

(11) **EP 3 482 975 B1**
(45) Veröffentlichungstag und Bekanntmachung des Hinweises auf die Patenterteilung: **01.01.2025**
(21) Anmeldenummer: 18201677.4
(22) Anmeldetag: 22.10.2018
(51) Int. Cl.: B60C 11/24, G06T 19/00, G01M 17/03

(54) **RAUPENFAHRZEUG**
TRACKED VEHICLE
VÉHICULE À CHENILLE

(30) Priorität: 08.11.2017 DE 102017126134
(43) Veröffentlichungstag der Anmeldung: 15.05.2019
(73) Patentinhaber: CLAAS Industrietechnik GmbH, 33106 Paderborn (DE)
(72) Erfinder: Morawitz, Martin, 33154 Salzkotten (DE); Meyer, Peter, 22927 Großhansdorf (DE); Verhorst, Jan-Willem, 59555 Lippstadt (DE)
(74) Vertreter: CLAAS Gruppe

(56) Entgegenhaltungen:
- US-A1- 2012 306 916
- US-A1- 2014 105 481

## Beschreibung

Die Erfindung betrifft ein Raupenfahrzeug, insbesondere ein landwirtschaftliches Raupenfahrzeug, mit den Merkmalen des Oberbegriffs von Anspruch 1 und ein Verfahren zur Verschleißzustands- und/der Lebensdauerbestimmung mindestens eines Raupenbands eines Raupenfahrzeugs gemäß dem Oberbegriff von Anspruch 15.

Unter einem Raupenfahrzeug wird im Sinne der Erfindung jegliche Form von Fahrzeug mit einem Raupenfahrwerk und ggf. einem zusätzlichen Radfahrwerk verstanden. Ein Raupenfahrzeug verfügt insbesondere über einen eigenen Fahrantrieb für die Erzeugung eines Vortriebs, kann aber auch ein nicht angetriebenes Fahrzeug, beispielsweise ein Anhänger sein. Obwohl es eine Vielzahl unterschiedlicher Anwendungen gibt, die von der vorliegenden Erfindung umfasst sind, sollen im Folgenden Raupenfahrzeuge zur Durchführung landwirtschaftlicher Arbeit, hier als landwirtschaftliche Raupenfahrzeuge bezeichnet, im Vordergrund stehen. Nur beispielhaft erwähnt seien Traktoren und selbstfahrende Erntemaschinen wie Mähdrescher oder Feldhäcksler.

Fahrzeuge dieser Art können als Raupenfahrzeug oder Halbraupenfahrzeug ausgebildet sein. Diese weisen ein Raupenfahrwerk mit mindestens einem Raupenschiff, insbesondere mit mindestens zwei bezogen auf die Fahrzeuglängsachse (Fahrtrichtung) gegenüberliegenden Raupenschiffen, auf. Die Raupenschiffe weisen wiederum jeweils mehrere Rollen auf die über ein umlaufendes Raupenband in Form eines Laufbandes oder einer Gleiskette miteinander verbunden sind. Beispielsweise sind Raupenschiffe bekannt, die eine vom Fahrantrieb angetriebene Antriebsrolle, eine Führungsrolle und dazwischenliegende Laufrollen aufweisen. In einer anderen Variante, dem sogenannten Dreieckslaufwerk, weist das Raupenschiff zwei Führungsrollen und ein mittig darüber angeordnetes Antriebsrad auf. Im Vordergrund soll hier die Variante eines Fahrzeugs mit einem Raupenlaufband stehen.

Raupenfahrwerke werden oft an landwirtschaftlichen Fahrzeugen eingesetzt, die eine hohe Achsbelastung haben. Dabei ist der Verschleiß der Außenstellen der Raupenbänder, die bei Gleisketten auch als Kettenpolster bezeichnet werden, eines der maßgeblichen Kriterien für den Endkunden, da die Lebensdauer meist geringer als bei Radfahrwerken ist und die Ersatzteilkosten vergleichsweise hoch sind. Der Anwender geht in der Regel von einem linearen Verschleiß aus und wechselt das Raupenband in der Regel vor Beginn der Einsatzkampagne, um Stillstandzeiten während der Kampagne zu vermeiden. Der Verschleiß ist aber, unter Anderem auf Grund der sich nach oben hin verjüngenden Form der Außenstollen, oftmals nicht linear, sondern beispielsweise degressiv, d.h. der Verschleiß schreitet mit zunehmender Einsatzdauer immer weniger fort. Es kann daher durchaus vorkommen, dass der Anwender ein Raupenband vor einer anstehenden Kampagne ersetzt, obwohl es noch während der gesamten Kampagne hätte eingesetzt werden können.

Da es für den Anwender schwierig ist, den optimalen Zeitpunkt zum Wechseln der Raupenbänder zu bestimmen, ist es aus einem Stand der Technik, von dem die vorliegende Erfindung ausgeht, bekannt, mittels spezifischer Verschleißdiagramme vom Bandhersteller die Restlebensdauer zu bestimmen. Dazu muss der Anwender manuell die Höhe der Außenstellen messen und dann den Wert über die Betriebsstundenzahl in ein Nomogramm eintragen. Über den Vergleich mehrerer Messwerte kann er dann die Restlebensdauer prognostizieren. Dieses Verfahren ist aber aufwändig und fehleranfällig.

Aus dem Stand der Technik ist es auch bekannt, Temperatursensoren in Reifen eines Fahrwerks vorzusehen, die drahtlos ein Temperatursignal übermitteln, welches als Fahrerinformation verwendet werden kann, um einen kritischen Verschleißzustand zu vermeiden. Eine Integration entsprechender Sensoren in ein Raupenband ist aber aufwändig und kostenintensiv. Zudem sind solche Sensoren im Betrieb erheblichen Belastungen ausgesetzt und können dadurch auch ausfallen oder fehlerhafte Messwerte liefern. Vorrichtungen und Verfahren des Standes der Technik sind beispielsweise in US 2012/306916A1 und US 2014/105481 A1 offenbart.

Der Erfindung liegt das Problem zugrunde, das bekannte Raupenfahrzeug derart auszugestalten und weiterzubilden, dass eine Verschleißzustands- und/oder Lebensdauerbestimmung der Raupenbänder optimiert wird.

Das obige Problem wird bei einem Raupenfahrzeug gemäß dem Oberbegriff von Anspruch 1 durch die Merkmale des kennzeichnenden Teils von Anspruch 1 gelöst.

Der vorschlagsgemäßen Lösung liegt die grundsätzliche Überlegung zugrunde, dass ein Raupenfahrzeug neben der über die Einsatzdauer vergleichsweise stark verschleißenden Raupenbandkomponente, insbesondere den Außenstollen, auch Komponenten mit einem im Vergleich dazu geringeren oder überhaupt keinem Verschleiß aufweist, beispielsweise die Rollen oder andere Komponenten des Raupenfahrwerks oder des Raupenfahrzeugs. Auch das Raupenband selbst besteht aus verschiedenen Komponenten, die zwangsläufig einem unterschiedlichen Verschleiß unterliegen. Beispielsweise ändert sich die Höhe und/oder Breite der Außenstellen über die Einsatzdauer vergleichsweise stark, wohingegen sich die Dicke und/oder Breite des Raupengurts in diesem Zeitraum nicht oder zumindest nicht nennenswert ändert.

Über ein bildgestütztes Verfahren lässt sich nun, beispielsweise anhand einer Nahaufnahme eines Fahrzeugbereichs, der das Raupenband oder zumindest die Außenstollen mit umfasst, die Höhe und/oder Breite der Außenstollen zu einer Erstreckung der weniger stark oder überhaupt nicht verschleißenden Komponente ("Referenzgeometrie"), insbesondere zu der Dicke und/oder Breite des Raupengurts, ins Verhältnis setzen und darüber der Verschleißzustand und, insbesondere über ein elektronisch hinterlegtes Verschleißmodell, die Restlebensdauer des Raupenbandes ermitteln.

Die vorgesehene Auswertevorrichtunc vergleicht das Ergebnis des Vergleichs zweier Radialerstreckungen (Höhe der Außenstollen einerseits und Dicke des Raupengurts andererseits) oder zweier Breitenerstreckungen (Breite der Außenstollen in oder quer zur Fahrtrichtung einerseits und Breite des Raupengurts andererseits) mit in einer Datenbank hinterlegten Sollwerten ("Verschleißmodell") und ermittelt darüber den aktuellen Verschleißzustand.

Es ist auch denkbar, dass die Auswertevorrichtung dem Anwender, zusätzlich oder alternativ, das ermittelte Messwerte-Verhältnis, also beispielsweise das Verhältnis der Höhe bzw. Breite der Außenstollen zur Dicke bzw. Breite des Raupengurts, und/oder die anhand des Messwerte-Verhältnisses ermittelte absolute Höhe bzw. Breite der Außenstellen, insbesondere als Zahlenwert, anzeigt. Wird die vorschlagsgemäße Bestimmung des Verschleißzustandes ("Messung") mehrfach über die Einsatzdauer des Raupenbandes durchgeführt und werden die jeweiligen Vergleichsergebnisse gespeichert, kann das Verschleißmodell auf Basis der Messungen automatisch weiter angepasst werden. Die Restlebensdauer des Raupenbandes kann dann besonders präzise ermittelt werden, da hiermit auch ein individuelles Verschleißverhalten berücksichtigt werden kann.

Im Einzelnen wird vorgeschlagen, dass eine Auswertevorrichtung vorgesehen ist, welche konfiguriert ist, eine Bestimmung des Verschleißzustandes mindestens eines Raupenbandes des Raupenfahrwerks mittels eines bildgestützten Vergleichs mindestens zweier Fahrzeugkomponenten, von denen mindestens eine eine Komponente des Raupenbandes ist, durchzuführen. Eine solche Bestimmung des Verschleißzustandes erfolgt insbesondere automatisiert, sobald eine mobile Kamera des Anwenders oder eine ortsfest am Fahrzeug montierte Kamera eine Aufnahme des Raupenbandes, beispielsweise eine seitliche Nahaufnahme oder eine Nahaufnahme von oben, macht.

Nach der bevorzugten Ausgestaltung gemäß Anspruch 2 ist die Auswertevorrichtung konfiguriert, eine Bestimmung des Verschleißzustandes mindestens eines Raupenbandes des Raupenfahrwerks mittels eines bildgestützten Vergleichs mindestens zweier Komponenten des Raupenbandes durchzuführen.

Der Anspruch 3 definiert die miteinander zu vergleichenden Komponenten näher. Nach der Ausgestaltung gemäß Anspruch 1 4- handelt es sich bei dem Raupenband um ein Laufband, das als Komponenten einen Raupengurt und außenseitig am Raupengurt angeordnete Au-βenstollen umfasst. Ein solches Raupenband kann auch innenseitig am Raupengurt angeordnete Führungsblöcke bzw. -zähne aufweisen, die grundsätzlich auch eine Komponente bilden, die bei dem bildgestützten Vergleich berücksichtigt werden kann. Der Vollständigkeit halber sei darauf hingewiesen, dass auf die vorschlagsgemäße Weise auch der Verschleißzustand einer Gleiskette und insbesondere der Kettenpolster bestimmt werden kann.

Anspruch 4 8- definiert eine besonders bevorzugte Ausgestaltung, gemäß der die Dicke des Raupengurts mit der Höhe mindestens eines der Außenstollen verglichen wird. Wie zuvor angedeutet können grundsätzlich aber auch andere Komponenten des Fahrzeugs oder des jeweiligen Raupenbandes miteinander verglichen werden. Besonders bevorzugt handelt es sich bei den Komponenten, die mit den Außenstollen verglichen werden, aber um den Raupengurt und/oder um die Führungsblöcke, da deren Abmessungen einfach bestimmbar sind und diese Komponenten keinen oder zumindest keinen nennenswerten Verschleiß bezogen auf ihre Erstreckung in radialer Richtung, in Fahrtrichtung und/oder quer zur Fahrtrichtung haben.

Gemäß der Ausgestaltung nach Anspruch 5 ist die Auswertevorrichtung konfiguriert, den bildgestützten Vergleich basierend auf einem Bild, beispielsweise einer seitlichen Aufnahme, durchzuführen, das bzw. die von einer Kamera aufgenommen wird und mindestens zwei der zu vergleichenden Komponenten abbildet. Die Kamera ist dabei insbesondere Bestandteil der Auswertevorrichtung.

Nach der besonders bevorzugten Ausgestaltung gemäß Anspruch 6 handelt es sich bei der Auswertevorrichtung um eine mobile Auswertevorrichtung, also eine Auswertevorrichtung, die nicht zwingend ortsfest mit dem Raupenfahrzeug verbunden ist. Eine mobile Auswertevorrichtung ist insbesondere ein Smartphone, ein Tablet-Computer, ein Notebook o.dgl.. Ein wesentlicher Vorteil hierbei ist, dass eine solche Auswertevorrichtung von jedem Anwender mitgeführt werden kann, was insbesondere im Falle eines Smartphones heutzutage ohnehin üblich ist, wodurch die Auswertevorrichtung auch für unterschiedliche Raupenfahrzeuge, insbesondere landwirtschaftliche Raupenfahrzeuge, verwendet werden kann. Grundsätzlich kann die Auswertevorrichtung aber auch Bestandteil eines fahrzeugeigenen Fahrerassistenzsystems und somit nicht mobil sein, wobei dann aber die Kamera mobil ist.

Nach der Ausgestaltung gemäß Anspruch 7 8- kann die Auswertevorrichtung das aufgenommene Bild, beispielsweise die seitliche Nahaufnahme, anzeigen. Zusätzlich oder alternativ kann die Auswertevorrichtung auch Fahrerinformationen graphisch und/oder mittels Augmented Reality darstellen. Letzteres ermöglicht beispielsweise, mittels der Kamera einer ortsfest am Fahrzeug installierten oder insbesondere einer mobilen Auswertevorrichtung, beispielsweise eines Smartphones, das jeweilige Raupenband visuell zu erfassen, wobei gleichzeitig über das Prinzip der Augmented Reality der Verschleißzustand und/oder graphische Hilfsmittel, beispielsweise virtuelle Hilfslinien, zur Bestimmung des Verschleißzustands angezeigt wird bzw. werden. Der Verschleißzustand kann beispielsweise auch durch eine Einfärbung der dargestellten Außenstollen dargestellt werden.

Nach der weiter bevorzugten Ausgestaltung gemäß Anspruch 8 9- werden in das Bild als Fahrerinformationen insbesondere parallele virtuelle Linien eingeblendet, wobei eine erste der Linien entlang der Unterseite des Raupengurts, eine zweite der Linien entlang der Oberseite des Raupengurts und eine dritte der Linien entlang der Oberseite eines oder mehrerer der Außenstollen verläuft. Diese Linien kann die Auswertevorrichtung als Hilfslinien verwenden, um darüber das Verhältnis von Gurtdicke zu Stollenhöhe zu bestimmen, aus dem sich dann der Verschleißzustand und insbesondere die tatsächliche Stollenhöhe ermitteln lässt.

Die Ansprüche 9 bis 11 definieren verschiedene Möglichkeiten des bildgestützten Vergleichs der mindestens zwei Komponenten des Raupenbandes. Der Vergleich kann gemäß Anspruch 11 pixelbasiert erfolgen, also durch eine Verhältnisrechnung der Pixelanzahl, so dass das Einhalten eines genauen Abstandes zwischen Kamera und Raupenband nicht erforderlich ist.

Nach der Ausgestaltung gemäß Anspruch 12 sind über die Auswertevorrichtung raupenbandspezifische Daten eingebbar und/oder empfangbar, die die ursprüngliche und/oder aktuelle Dicke und/oder Breite des Raupengurts beinhalten oder mit denen sich die Dicke und/oder Breite ermitteln lässt. Beispielsweise ist es denkbar, dass der Anwender über die insbesondere mobile Auswertevorrichtung, beispielsweise das Smartphone, den Raupenbandtyp eingibt, was der Auswertevorrichtung ermöglicht, über eine entsprechende Datenbank die ursprüngliche Dicke und/oder Breite des Raupengurts zu ermitteln. Auch ist es denkbar, dass der Anwender einzelne der ursprünglichen Abmessungen des Raupenbandes, beispielsweise die ursprüngliche Stollenhöhe und/oder -breite und/oder die Gesamtdicke von Raupengurt und Außenstellen, in die Auswertevorrichtung eingibt. Mit Hilfe des eingegebenen oder auf diese Weise ermittelten Absolutwerts für die Dicke und/oder Breite des Raupengurts kann die Auswertevorrichtung dann basierend auf dem bildgestützten Vergleichsergebnis rechnerisch den Absolutwert für die Stollenhöhe und/oder -breite ermitteln.

Nach der Ausgestaltung gemäß Anspruch 13 können diverse weitere Fahrerinformationen angezeigt werden, beispielsweise mindestens eine graphische Darstellung eines radialen Querschnitts des jeweiligen Raupenbandes, wobei diese Darstellung zumindest einen Außenstollen und einen zugeordneten Abschnitt des Raupengurts umfasst. Auch lassen sich als Fahrerinformation die virtuellen Linien nicht nur im Bild, sondern als zusätzliche Orientierung für den Anwender auch innerhalb der graphischen Darstellung des radialen Querschnitts anzeigen. Als noch eine weitere Fahrerinformation kann die ermittelte Höhe und/oder Breite der Außenstellen, insbesondere als Absolutwert, angezeigt werden. Weiterhin ist es denkbar, den Verschleißzustand, die Restlebensdauer und/oder das Datum der ersten Anwendung und/oder den Straßenfahranteil für das jeweilige Raupenband anzuzeigen. Grundsätzlich ist dabei auch denkbar, einzelne oder mehrere dieser Fahrerinformationen für zwei bezogen auf die Fahrzeuglängsachse gegenüberliegende Raupenbänder gleichzeitig anzuzeigen, was einen einfachen Vergleich der jeweiligen Verschleißzustände der beiden Raupenbänder zulässt.

Nach der weiter bevorzugten Ausgestaltung gemäß Anspruch 14 kann der jeweils ermittelte Abstand zwischen Oberseite des Raupengurts und Oberseite des oder der Außenstellen und/oder der jeweils ermittelte Abstand zwischen der zweiten und der dritten der Hilfslinien und/oder der ermittelte Verschleißzustand und/oder die ermittelte Höhe der Außenstollen in einem Speicher abgelegt werden. Insbesondere können diese Daten in dem Speicher gesammelt werden, wodurch die Auswertevorrichtung die Lebensdauer besonders präzise ermitteln kann.

Nach einer weiteren Lehre gemäß Anspruch 15, der eigenständige Bedeutung zukommt, wird ein Verfahren zur Verschleißzustands- und/oder Lebensdauerbestimmung mindestens eines Raupenbands eines Raupenfahrzeugs beansprucht, wobei mindestens ein Raupenschiff eines Raupenfahrwerks des Fahrzeugs jeweils mindestens zwei Fahrwerksräder und ein über die Fahrwerksräder geführtes Raupenband aufweist. Es ist dabei vorgesehen, dass eine Auswertevorrichtung eine Bestimmung des Verschleißzustandes mindestens eines der Raupenbänder mittels eines bildgestützten Vergleichs mindestens zweier Fahrzeugkomponenten des Raupenfahrzeugs, von denen mindestens eine eine Komponente des Raupenbandes ist, durchführt.

Im Folgenden wird die Erfindung anhand einer lediglich Ausführungsbeispiele darstellenden Zeichnung näher erläutert. In der Zeichnung zeigt
- Fig. 1: ein vorschlagsgemäßes Raupenfahrzeug in Form eines landwirtschaftlichen Fahrzeugs mit einem Halbraupenfahrwerk und einer mobilen Auswertevorrichtung,
- Fig. 2: eine Darstellung von Fahrerinformationen gemäß einem ersten Ausführungsbeispiel zu einem ersten Zeitpunkt,
- Fig. 3: eine Darstellung von Fahrerinformationen entsprechend dem ersten Ausführungsbeispiel zu einem späteren Zeitpunkt und
- Fig. 4: eine Darstellung von Fahrerinformationen gemäß einem zweiten Ausführungsbeispiel.

Das vorschlagsgemäße Raupenfahrzeug, das hier beispielhaft als landwirtschaftliches Raupenfahrzeug 1 ausgebildet ist, kann ganz unterschiedlich ausgestaltet sein. Beispielsweise kann es sich bei dem landwirtschaftlichen Fahrzeug 1 um eine selbstfahrende Erntemaschine, wie einen Mähdrescher oder einen Feldhäcksler, um einen Traktor oder auch um einen Anhänger handeln. Die Vorzüge der vorschlagsgemäßen Lösung zeigen sich besonders deutlich bei Raupenfahrzeugen oder Halbraupenfahrzeugen mit einem Raupenfahrwerk. Bei dem dargestellten und insoweit bevorzugten Ausführungsbeispiel handelt es sich bei dem landwirtschaftlichen Fahrzeug 1 um einen Mähdrescher mit Halbraupenfahrwerk, wie noch erläutert wird.

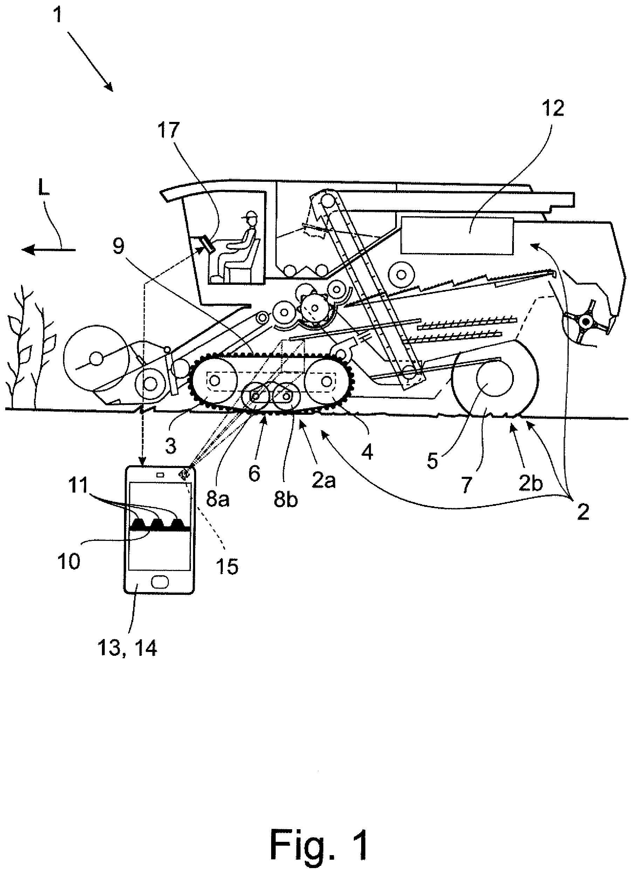

Das Fahrwerk 2 des hier beispielhaft beschriebenen landwirtschaftlichen Fahrzeugs 1 weist hier und vorzugsweise mindestens zwei bezogen auf die Fahrzeuglängsachse bzw. Fahrtrichtung L gegenüberliegende Fahrwerksräder 3 - 5 auf. In der Ansicht in Fig. 1 sind nur die linken Fahrwerksräder 3 - 5 zu erkennen. Bezogen auf die Fahrzeuglängsachse bzw. Fahrtrichtung L liegen diesen Fahrwerksrädern 3 - 5 entsprechende Fahrwerksräder 3 - 5 gegenüber. Dabei sind die Fahrwerksräder 3, 4 Bestandteil eines Raupenfahrwerks 2a und die Fahrwerksräder 5 Bestandteil eines Radfahrwerks 2b. Entsprechend laufen die Fahrwerksräder 3, 4 in zugeordneten Raupenschiffen 6, wohingegen die Fahrwerksräder 5 über Reifen 7 auf dem Boden abrollen. Der Begriff "Fahrwerksrad" ist vorliegend also weit zu verstehen. Er umfasst sowohl Räder, die einem Raupenfahrwerk 2a zugeordnet sind und in entsprechenden Raupenschiffen 6 laufen, als auch Räder, die einem Radfahrwerk 2b zugeordnet sind und jeweils mit einem Reifen 7 versehen sind. Es sei angemerkt, dass, obwohl hier von mehreren Raupenschiffen 6 die Rede ist, es allgemein auch denkbar ist, nur ein einzelnes Raupenschiff 6 vorzusehen.

Das Raupenfahrwerk 2a weist hier zwei bezogen auf die Fahrzeuglängsachse bzw. Fahrtrichtung L gegenüberliegende Raupenschiffe 6 auf, die hier und vorzugsweise jeweils ein vorderes Fahrwerksrad 3 als Führungsrad bzw. Führungsrolle, ein hinteres Fahrwerksrad 4 als Antriebsrad bzw. Antriebsrolle und hier und vorzugsweise zwei dazwischenliegende Laufräder bzw. Laufrollen 8a, 8b aufweisen. Die Raupenschiffe 6 weisen darüber hinaus jeweils ein Raupenband 9 auf, das die Fahrwerksräder 3, 4 und Laufräder bzw. Laufrollen 8a, 8b verbindet. Die Laufräder bzw. Laufrollen 8a, 8b halten den unteren Strang des jeweiligen Raupenbandes 9 in durchgehendem Bodenkontakt, so dass sich eine gleichmäßige Gewichtsverteilung über die gesamte Kontaktfläche zwischen dem Boden und dem jeweiligen Raupenband 9 ergibt. Das Raupenband 9 ist hier als Raupenlaufband ausgebildet, das einen Raupengurt 10 aus mehreren mit Gummi umspritzten Lagen aus Gewebe und Stahl sowie radial außenseitige Außenstollen 11 und radial innenseitige Führungsblöcke (nicht dargestellt) aufweist. Die vorschlagsgemäße Lösung ist aber auch grundsätzlich auf eine Raupenkette bzw. Gleiskette mit mehreren stählernen Laufflächengliedern, die mit den Außenstollen entsprechenden außenseitigen Gummipolstern versehen sind, anwendbar. Grundsätzlich sind auch andere Arten von Raupenschiffen denkbar, die beispielsweise eine Dreiecksform mit zwei den durchgehenden Bodenkontakt herstellenden Führungsrollen und einer mittig darüber angeordneten Antriebsrolle aufweisen (Dreieckslaufwerk).

Weiter ist hier und vorzugsweise ein Fahrantrieb 12 für die Erzeugung eines Vortriebs des landwirtschaftlichen Fahrzeugs 1 vorgesehen, der aber bei der vorschlagsgemäßen Lösung nicht zwingend ist, beispielsweise bei einem nicht angetriebenen Anhänger. Bei dem hier dargestellten Ausführungsbeispiel sind jedenfalls die Fahrwerksräder 4 durch den Fahrantrieb 12 antreibbar. Grundsätzlich ist es auch denkbar, dass zusätzlich oder alternativ die Fahrwerksräder 3 des Raupenfahrwerks 2a oder alle Fahrwerksräder 3 - 5 des landwirtschaftlichen Fahrzeugs 1 insgesamt durch den Fahrantrieb 12 antreibbar sind.

Wesentlich ist nun, dass eine Auswertevorrichtung 13 vorgesehen ist, die konfiguriert ist, eine Bestimmung des Verschleißzustands mindestens eines der Raupenbänder 9 mittels eines bildgestützten Vergleichs mindestens zweier Komponenten 10, 11 des Fahrzeugs 1, von denen zumindest eine eine Komponente 10, 11 des Raupenbandes 9 ist, durchzuführen. Beispielsweise unterliegt bei dem Raupenband 9 eine der Komponenten 10, 11, nämlich der Raupengurt 10, einem erheblich geringeren Verschleiß als die andere Komponente, nämlich die Außenstollen 11. Hier und vorzugsweise unterliegt der Raupengurt 10 sogar überhaupt keinem nennenswerten Verschleiß. Mit "Verschleiß" ist hier eine verschleißbedingte Verringerung der Abmessungen der jeweiligen Komponente 10, 11 gemeint, d.h., eine verschleißbedingte Reduzierung der Dicke und/oder Breite des Raupengurts 10 und eine verschleißbedingte Reduzierung der Höhe der Außenstollen 11. Im Falle sich zur Bandaußenseite hin verjüngender Außenstollen 11 kann sich verschleißbedingt mit abnehmender Höhe der Außenstollen 11 auch deren Breite vergrößern.

Vorschlagsgemäß ist somit vorgesehen, dass ein Verschleiß einer Komponente 11 des Raupenbands 9, insbesondere automatisiert, durch einen bildbasierten Vergleich dieser Komponente 11 mit einer weiteren Komponente 10 des Raupenfahrzeugs bzw. hier und vorzugsweise des Raupenbandes 9 ermittelt wird, die keinem oder einem deutlich geringeren Verschleiß unterliegt. Letztere dient damit als Referenzgeometrie für den Vergleich.

Auf diese Weise kann die abnehmende Erstreckung, beispielsweise radiale Erstreckung, der vergleichsweise stark verschleißenden Komponente 11, hier der Außenstollen 11, mit der Referenzgeometrie, beispielsweise der radialen Erstreckung der kaum oder überhaupt nicht verschleißenden Komponente 10, hier des Raupengurts 10, verglichen werden. Bei Kenntnis des ursprünglichen Verhältnisses zwischen verschleißender Komponente und Referenzgeometrie, hier zwischen Stollenhöhe und Gurtdicke, kann so der Verschleißzustand bzw. Verschleißgrad ermittelt werden. Der Verschleißzustand lässt sich auch anhand einer Folge von mehreren solcher bildgestützten Vergleiche über die Einsatzdauer des jeweiligen Raupenbands 9 bestimmen. Die Auswertevorrichtung 13 kann auch bei Kenntnis eines Absolutwerts der Referenzgeometrie, hier also einer der Raupenbandabmessungen, beispielsweise der aktuellen oder ursprünglichen Höhe des Raupengurts 10, rechnerisch über das ermittelte Verhältnis zwischen verschleißender Komponente und Referenzgeometrie, hier zwischen Raupengurtdicke und Stollenhöhe, einen aktuellen Absolutwert für die Erstreckung der verschleißenden Komponente, hier der Stollenhöhe oder -breite, errechnen und ggf. auch anzeigen.

Die Auswertevorrichtung 13 erlaubt hier und vorzugsweise auch basierend auf der ermittelten Erstreckung der verschleißenden Komponente, hier der Stollenhöhe oder -breite, die Berechnung einer Restlebensdauer des jeweiligen Raupenbands 9, insbesondere über ein Verschleißmodell, das in der Auswertevorrichtung 13 hinterlegt sein kann oder auf das diese zugreifen kann. In einem solchen Verschleißmodell ist abhängig vom verwendeten Raupenbandtyp beispielsweise verschiedenen Stollenhöhen und/oder -breiten ein entsprechender Wert für die Restlebensdauer zugeordnet.

Es sei nochmals hervorgehoben, dass bei dem hier beschriebenen Ausführungsbeispiel der Verschleißzustand der Außenstellen 11 durch den Vergleich der Außenstellen 11 mit dem Rampengurt 10 bestimmt wird. Grundsätzlich wäre es aber auch denkbar, die Außenstellen 11 mit anderen Komponenten des Raupenfahrzeugs 1 oder Raupenbands 9, beispielsweise den hier nicht dargestellten innenliegenden Führungsblöcken des jeweiligen Raupenbandes 9, zu vergleichen, da auch andere Komponenten wie die Führungsblöcke im Laufe der Einsatzdauer keinem nennenswerten Verschleiß unterliegen, der ihre als Referenzgeometrie dienenden Abmessungen, beispielsweise radialen Abmessungen bzw. ihre Höhe, beeinflusst.

Bei dem in Fig. 1 dargestellten landwirtschaftlichen Raupenfahrzeug 1 ist als Auswertevorrichtung 13 ein Smartphone 14 vorgesehen. Alternativ kann auch ein Tablet-Computer, Notebook o. dgl. als Auswertevorrichtung 13 verwendet werden. Grundsätzlich muss es sich bei der Auswertevorrichtung 13 aber nicht um eine mobile Auswertevorrichtung handeln, sondern diese kann auch ortsfest im oder am Fahrzeug 1, insbesondere als Bestandteil eines Fahrerassistenzsystems 17, oder an einer anderen Stelle, beispielsweise auf dem landwirtschaftlichen Hof, installiert sein. Es muss lediglich gewährleistet sein, dass der Auswertevorrichtung 13 ein Bild des Raupenbands 9 oder eines Abschnitts davon zur Verfügung steht, mit dem die Auswertevorrichtung 13 den vorschlagsgemäßen Vergleich der mindestens zwei Komponenten 10, 11 durchführen kann.

Vorzugsweise ist eine Kamera 15 vorgesehen, die es erlaubt, ein Bild des Raupenbands 9 aufzunehmen, beispielsweise in Form einer seitlichen Nahaufnahme oder einer Aufnahme von oben, die bzw. das die mindestens zwei zu vergleichenden Komponenten zeigt. Bei dem Ausführungsbeispiel in Fig. 1 ist die Kamera 15 Bestandteil des Smartphones 14 und somit Bestandteil der hier mobilen Auswertevorrichtung 13. Grundsätzlich kann die Kamera 15 auch ortsfest am Fahrzeug 1 montiert sein. Wie in Fig. 1 dargestellt, kann mit der Kamera 15 auf einfache Weise ein Bereich am Fahrzeug 1 mit dem Raupenband 9 erfasst werden und ein Bild erzeugt werden, in welchem die beiden Komponenten 10, 11 in ihrer gesamten für den Vergleich maßgeblichen Erstreckung, hier beispielsweise radialen Erstreckung, erkennbar sind.

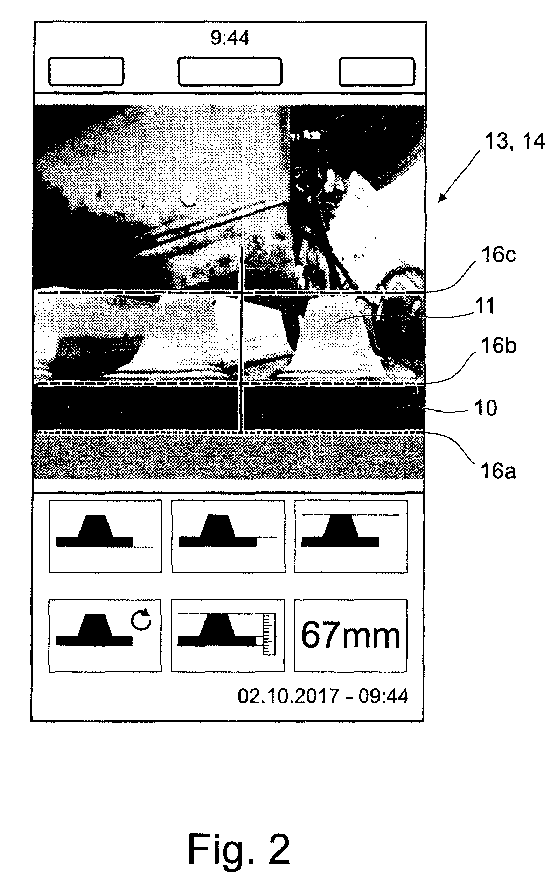

Wie die Figuren 2 bis 4 zeigen, kann die Auswertevorrichtung 13 ein Computerprogramm bzw. eine entsprechende mobile App zur Verschleißzustands- und/oder Lebensdauerbestimmung aufweisen, über die das aufgenommene Bild angezeigt werden kann. Hier und vorzugsweise können auf der Auswertevorrichtung 13 darüber außerdem noch verschiedene Fahrerinformationen graphisch und/oder mittels Augmented Reality dargestellt werden.

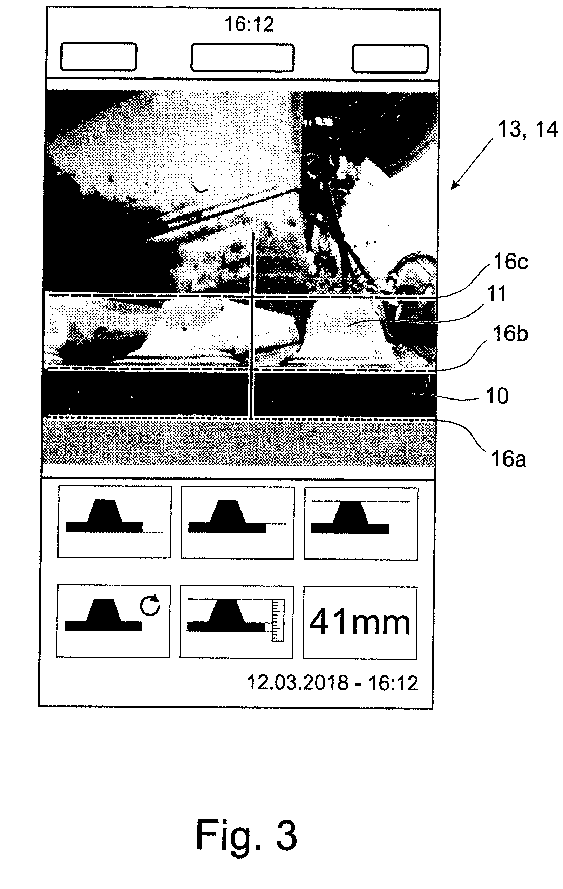

In den Fig. 2 und 3 ist beispielsweise erkennbar, dass als Fahrerinformationen in das Bild mehrere parallele virtuelle Linien 16a, 16b, 16c eingeblendet werden können. Dies geschieht insbesondere mittels Augmented Reality, d.h. die virtuellen Linien 16a, 16b, 16c werden in Echtzeit in das Kamerabild, insbesondere Live-Bild, eingeblendet. Eine erste Linie 16a erstreckt sich hier und vorzugsweise entlang der im Bild dargestellten Unterseite des Raupengurts 10 des jeweiligen Raupenbands 9. Eine zweite Linie 16b erstreckt sich entlang der dargestellten Oberseite des Raupengurts 10. Schließlich erstreckt sich eine dritte Linie 16c entlang der Oberseite eines oder mehrerer im Bild dargestellter Au-ßenstollen 11. Anhand der Linien 16a, 16b, 16c bzw. der jeweiligen Abstände dazwischen kann nicht nur der Anwender auf den ersten Blick das Verhältnis zwischen Raupengurtdicke und Außenstollenhöhe erkennen, sondern die Auswertevorrichtung 13 kann darüber das genannte Verhältnis auch genau berechnen und darüber den Verschleißzustand ermitteln. Bei Vergleich der Figuren 2 und 3 ist ohne Weiteres erkennbar, dass das Verhältnis zwischen Raupengurtdicke und Außenstollenhöhe im Laufe der Einsatzdauer zugenommen hat. So lag das Verhältnis zu dem in Fig. 2 gewählten Zeitpunkt noch etwa bei 1/3, wohingegen das Verhältnis bei dem in Fig. 3 gewählten Zeitpunkt bei etwa 1/2 liegt.

Es sei hervorgehoben, dass die Auswertevorrichtung 13 die bildgestützten Vergleiche grundsätzlich auch ohne Vorhandensein der besagten virtuellen Linien 16a, 16b, 16c durchführen kann. Die virtuellen Linien haben aber auch den Vorteil, dass die Auswertevorrichtung 13 die Abstände zwischen den Linien 16a, 16b, 16c pixelbasiert ermitteln und/oder die jeweiligen Abstände pixelbasiert miteinander vergleichen kann. Auf diese Weise ist es nicht erforderlich, beim Erstellen des Bildes einen bestimmten Abstand zwischen Kamera 15 und Raupenband 9 und/oder einen bestimmten Winkel zum Raupenband 9 einzuhalten.

Wie die Figuren 2 und 3 ebenfalls zeigen, ist die Auswertevorrichtung 13 hier und vorzugsweise auch konfiguriert, basierend auf dem Vergleich des Abstands zwischen den Linien 16a und 16b, der der Dicke des Raupengurts 10 entspricht, und dem Abstand zwischen den Linien 16b und 16c, der der Höhe der Außenstellen 11 entspricht, die Höhe der Außenstellen 11 als Absolutwert zu ermitteln. So beträgt die Höhe der Außenstellen 11 zu dem Zeitpunkt, auf dem die Aufnahme in Fig. 2 beruht, 67 mm, und zu dem Zeitpunkt, auf dem die Aufnahme in Fig. 3 beruht, 41 mm. Zum Zweck der Absolutwertbestimmung erlaubt die Auswertevorrichtung 13 hier und vorzugsweise auch die anwenderseitige Eingabe und/oder den Empfang raupenbandspezifischer Daten, die die ursprüngliche und/oder die aktuelle Dicke des Raupengurts 10 umfassen oder die eine Ermittlung dieser Dicke durch die Auswertevorrichtung 13 erlauben. Beispielsweise ist es denkbar, in die Auswertevorrichtung 13 den Raupenbandtyp des jeweiligen Raupenbands 9 einzugeben. Es ist auch denkbar, die genauen Abmessungen, insbesondere nach einer manuellen Messung, der Raupengurtdicke und/oder der Stollenhöhe einzugeben oder entsprechende Daten an die Auswertevorrichtung 13 zu übertragen.

Das besagte, von der hier mobilen Kamera 15 aufgenommene Bild des Raupenbands 9 wird insbesondere in Echtzeit mittels Augmented Reality von den genannten virtuellen Linien überlagert. Auch die auf dem Verhältnis der Raupengurtdicke zur Außenstollenhöhe basierende Bestimmung des Verschleißzustandes kann entsprechend in Echtzeit erfolgen. Der Verschleißzustand kann dann beispielsweise auch mittels Augmented Reality durch eine Einfärbung der auf dem aufgenommenen Bild erkennbaren Außenstellen 11 visualisiert werden.

Zusätzlich zu dem angezeigten Bild des Raupenbands 9 kann die Auswertevorrichtung 13 noch weitere Fahrerinformationen anzeigen. Bei den in den Fig. 2 und 3 gezeigten Darstellungen des Smartphones 14 werden im unteren Bildschirmabschnitt in der oberen Zeile drei graphische Darstellungen eines radialen Querschnitts des Raupenbands 9 jeweils mit einer der virtuellen Linien dargestellt. Darüber erhält der Anwender die Information, welche der im Bild eingeblendeten virtuellen Linien der Unterseite des Raupengurts 10, welche der Linien der Oberseite des Raupengurts 10 und welche der Linien der Oberseite der Außenstellen 11 entspricht. In der unteren Zeile ist ferner als virtuelles Bedienelement eine Reset-Taste (linke Taste) und eine Taste zum Starten des Vergleichsvorgangs (mittlere Taste) vorgesehen. Rechts davon wird dann die absolute Stollenhöhe angezeigt.

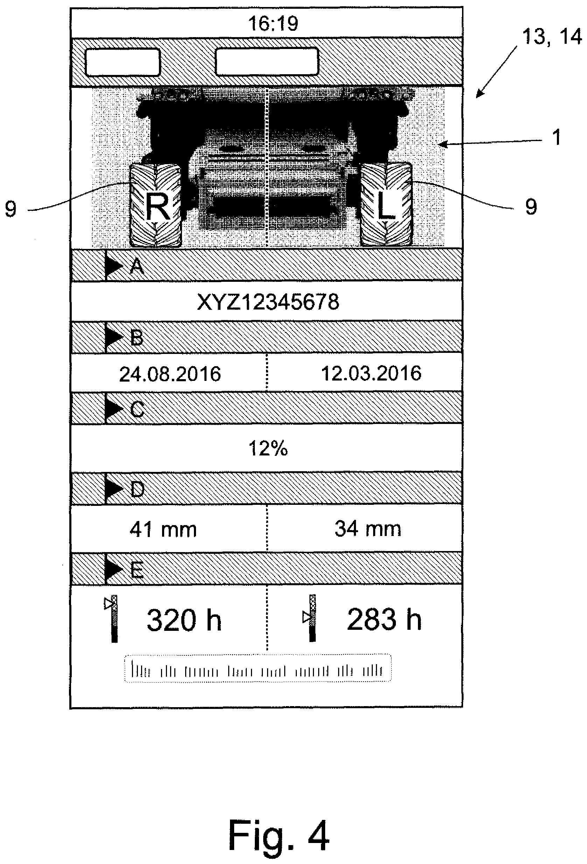

Fig. 4 zeigt eine andere Bildschirmansicht des Smartphones 14, bei der in einem oberen Bildschirmabschnitt das landwirtschaftliche Fahrzeug 1 von vorne dargestellt ist, und zwar hier und vorzugsweise ohne Vorsatzgerät, so dass die bezogen auf die Fahrzeuglängsachse gegenüberliegenden Raupenbänder 9 erkennbar sind. Darunter findet der Fahrer beispielsweise als weitere Fahrerinformationen die Fahrzeugnummer (mit "A" dargestellt), für jedes der beiden Raupenbänder 9 das jeweilige Datum der ersten Anwendung (mit "B" dargestellt), den über GPS ermittelten Straßenfahranteil (mit "C" dargestellt), für jedes der beiden Raupenbänder 9 den ermittelten Absolutwert für die Stollenhöhe (mit "D" dargestellt) und für jedes der beiden Raupenbänder 9 die Restlebensdauer und den Verschleißzustand (mit "E" dargestellt). Zusätzlich können noch, was hier am unteren Bildschirmrand dargestellt ist, weitere Fahrerinformationen, beispielsweise textbasierte Informationen, dargestellt werden.

Die entsprechend der vorschlagsgemäßen Lösung ermittelten Abstände zwischen der Oberseite des Raupengurts 10 und der Oberseite des oder der Au-ßenstollen 11 bzw. die ermittelten Abstände zwischen der zweiten Linie 16b und der dritten Linie 16c und/oder die ermittelten Verschleißzustände und/oder die ermittelten Werte für die Höhe der Außenstellen 11 werden hier und vorzugsweise alle in einem Speicher (nicht dargestellt) abgelegt und insbesondere gesammelt. Der Speicher kann Bestandteil der Auswertevorrichtung 13 oder eines Fahrerassistenzsystems 17 des landwirtschaftlichen Fahrzeugs 1 sein. Es kann sich auch um einen externen Speicher, z. B. eines Hofrechners, handeln. Insbesondere handelt es sich bei dem Speicher um einen Speicher eines Betriebskollektivs, der auch entsprechende Daten anderer landwirtschaftlicher Fahrzeuge enthält.

Der Vergleich der aktuellen Stollenhöhe und/oder -breite mit einer aus vorherigen Berechnungen prognostizierten Stollenhöhe bzw. -breite lässt sich auch dazu nutzen, das Verschleißmodell um individuelle Korrekturfaktoren zu justieren, wodurch die Restlebensdauer genauer ermittelt werden kann. Insbesondere geschieht dies automatisch. Es handelt sich insbesondere um ein lernendes System mit Hilfe eines zentralen neuronalen Netzes sowie einer Datenbank.

### Bezugszeichenliste

- 1: Raupenfahrzeug
- 2: Fahrwerk
- 2a: Raupenfahrwerk
- 2b: Radfahrwerk
- 3-5: Fahrwerksräder
- 6: Raupenschiffe
- 7: Reifen
- 8a,8b: Laufräder
- 9: Raupenband
- 10: Raupengurt
- 11: Außenstollen
- 12: Fahrantrieb
- 13: Auswertevorrichtung
- 14: Smartphone
- 15: Kamera
- 16a-16c: Hilfslinien
- 17: Fahrerassistenzsystem
- L: Fahrtrichtung

## Patentansprüche

1. Raupenfahrzeug, insbesondere landwirtschaftliches Raupenfahrzeug (1), mit einem Raupenfahrwerk (2a) mit mindestens einem Raupenschiff (6), wobei das jeweilige Raupenschiff (6) mindestens zwei Fahrwerksräder (3, 4) und ein über die Fahrwerksräder (3, 4) geführtes Raupenband (9) aufweist,
**dadurch gekennzeichnet,**
**dass** eine Auswertevorrichtung (13) vorgesehen ist, welche konfiguriert ist, eine Bestimmung des Verschleißzustandes mindestens eines Raupenbandes (9) des Raupenfahrwerks (2a) mittels eines bildgestützten Vergleichs mindestens zweier Komponenten (10, 11) des Raupenfahrzeugs (1), von denen mindestens eine eine Komponente (11) des Raupenbandes (9) ist, durchzuführen, wobei das jeweilige Raupenband (9) ein Laufband ist, das als Komponenten (10, 11) einen Raupengurt (10) und außenseitig am Raupengurt (10) angeordnete Außenstollen (11) umfasst,
wobei die Auswertevorrichtung (13) das Ergebnis des Vergleichs einer Höhe der Außenstolen und Dicke des Raupengurts oder der Breite der Außenstolen in oder quer zur Fahrtrichtung und Breite des Raupengurts mit in einer Datenbank hinterlegten Sollwerten vergleicht und darüber den aktuellen Verschleißzustand ermittelt.

2. Raupenfahrzeug nach Anspruch 1, **dadurch gekennzeichnet, dass** die Auswertevorrichtung (13) konfiguriert ist, eine Bestimmung des Verschleißzustandes mindestens eines Raupenbandes (9) des Raupenfahrwerks (2a) mittels eines bildgestützten Vergleichs mindestens zweier Komponenten (10, 11) des Raupenbandes (9) durchzuführen.

3. Raupenfahrzeug nach Anspruch 1 oder 2, **dadurch gekennzeichnet, dass** eine der mindestens zwei Komponenten (10, 11) einem geringeren Verschleiß bezogen auf ihre Erstreckung in radialer Richtung, in Fahrtrichtung (L) und/oder quer zur Fahrtrichtung (L) als die andere Komponente (11) und/oder keinem Verschleiß bezogen auf ihre Erstreckung in radialer Richtung, in Fahrtrichtung (L) und/oder quer zur Fahrtrichtung (L) unterliegt.

4. Raupenfahrzeug nach einem der vorhergehenden Ansprüche, **dadurch gekennzeichnet, dass** die Auswertevorrichtung (13) konfiguriert ist, bei dem bildgestützten Vergleich die Dicke und/oder Breite des Raupengurts (10) mit der Höhe und/oder Breite mindestens eines der Außenstollen (11) zu vergleichen.

5. Raupenfahrzeug nach einem der vorhergehenden Ansprüche, **dadurch gekennzeichnet, dass** die Auswertevorrichtung (13) konfiguriert ist, den bildgestützten Vergleich basierend auf einem mittels einer Kamera (15) aufgenommenen Bild durchzuführen, das die mindestens zwei zu vergleichenden Komponenten (10, 11) abbildet.

6. Raupenfahrzeug nach einem der vorhergehenden Ansprüche, **dadurch gekennzeichnet, dass** die Auswertevorrichtung (13) eine mobile Auswertevorrichtung (13) und/oder ein Smartphone (14), Tablet-Computer, Notebook oder dergleichen ist, und/oder, dass die Auswertevorrichtung (13) eine Tastatur und/oder einen Bildschirm und/oder einen Touchscreen aufweist.

7. Raupenfahrzeug nach einem der vorhergehenden Ansprüche, **dadurch gekennzeichnet, dass** die Auswertevorrichtung (13) konfiguriert ist, das aufgenommene Bild anzuzeigen und/oder Fahrerinformationen graphisch und/oder mittels Augmented Reality darzustellen.

8. Raupenfahrzeug nach einem der vorhergehenden Ansprüche, **dadurch gekennzeichnet, dass** in das Bild als Fahrerinformationen virtuelle Linien (16a, 16b, 16c) eingeblendet werden, wobei sich eine erste Linie (16a) entlang der im Bild dargestellten Unterseite des Raupengurts (10) des jeweiligen Raupenbands (9), eine zweite Linie (16b) entlang der dargestellten Oberseite des Raupengurts (10) des jeweiligen Raupenbands (9) und eine dritte Linie (16c) entlang der Oberseite eines oder mehrerer dargestellter Außenstollen (11) des jeweiligen Raupenbands (9) erstreckt.

9. Raupenfahrzeug nach Anspruch 8, **dadurch gekennzeichnet, dass** die Auswertevorrichtung (13) konfiguriert ist, den Abstand zwischen der Unterseite des Raupengurts (10) des jeweiligen Raupenbands (9) und der Oberseite des Raupengurts (10) des jeweiligen Raupenbands (9) und den Abstand zwischen der Oberseite des jeweiligen Raupengurts (10) und der Oberseite eines oder mehrerer Außenstollen (11) des jeweiligen Raupenbands (9) zu ermitteln und die ermittelten Abstände miteinander zu vergleichen, und/oder, den Abstand zwischen der ersten und der zweiten Linie (16a, 16b) und den Abstand zwischen der zweiten und der dritten Linie (16b, 16c) zu ermitteln und die ermittelten Abstände miteinander zu vergleichen.

10. Raupenfahrzeug nach einem der vorhergehenden Ansprüche, **dadurch gekennzeichnet, dass** die Auswertevorrichtung (13) konfiguriert ist, basierend auf dem Vergleich die Höhe und/oder Breite der Außenstollen (11) des jeweiligen Raupenbands (9) zu ermitteln.

11. Raupenfahrzeug nach einem der vorhergehenden Ansprüche, **dadurch gekennzeichnet, dass** der jeweilige Abstand pixelbasiert ermittelt und/oder die jeweiligen Abstände pixelbasiert miteinander verglichen werden.

12. Raupenfahrzeug nach einem der vorhergehenden Ansprüche, **dadurch gekennzeichnet, dass** über die Auswertevorrichtung (13) raupenbandspezifische Daten eingebbar und/oder empfangbar sind, die die ursprüngliche Dicke und/oder Breite des Raupengurts (10) des jeweiligen Raupenbands (9) umfassen oder geeignet sind, diese von der Auswertevorrichtung (13) ermitteln zu lassen.

13. Raupenfahrzeug nach einem der vorhergehenden Ansprüche, **dadurch gekennzeichnet, dass** als Fahrerinformation mindestens eine graphische Darstellung eines radialen Querschnitts des jeweiligen Raupenbands (9) angezeigt wird, die zumindest einen Außenstollen (11) und einen zugeordneten Abschnitt des Raupengurts (10) und/oder mindestens eine der virtuellen Linien zeigt, und/oder, dass als Fahrerinformation die ermittelte Höhe und/oder Breite der Außenstollen (11), der Verschleißzustand, die Restlebensdauer angezeigt wird.

14. Raupenfahrzeug nach einem der vorhergehenden Ansprüche, **dadurch gekennzeichnet, dass** der jeweils ermittelte Abstand zwischen der Oberseite des Raupengurts (10) des jeweiligen Raupenbands (9) und der Oberseite des oder der Außenstollen (11) des jeweiligen Raupenbands (9) und/oder der jeweils ermittelte Abstand zwischen der zweiten und der dritten Linie (16b, 16c) und/oder der ermittelte Verschleißzustand und/oder die jeweils ermittelte Höhe der Außenstollen (11) in einem Speicher abgelegt oder gesammelt wird.

15. Verfahren zur Verschleißzustands- und/oder Lebensdauerbestimmung mindestens eines Raupenbands (9) eines Raupenfahrzeugs, insbesondere eines Raupenfahrzeugs (1) nach einem der vorhergehenden Ansprüche, wobei mindestens ein Raupenschiff (6) eines Raupenfahrwerks (2a) des Fahrzeugs (1) jeweils mindestens zwei Fahrwerksräder (3, 4) und ein über die Fahrwerksräder (3, 4) geführtes Raupenband (9) aufweist,
**dadurch gekennzeichnet,**
**dass** eine Auswertevorrichtung (13) eine Bestimmung des Verschleißzustandes mindestens eines Raupenbandes (9) des Raupenfahrwerks (2a) mittels eines bildgestützten Vergleichs mindestens zweier Komponenten (10, 11) des Raupenfahrzeugs (1), von denen mindestens eine eine Komponente (11) des Raupenbandes (9) ist, durchführt
wobei das jeweilige Raupenband (9) ein Laufband ist, das als Komponenten (10, 11) einen Raupengurt (10) und außenseitig am Raupengurt (10) angeordnete Außenstollen (11) umfasst,
wobei die Auswertevorrichtung (13) das Ergebnis des Vergleichs einer Höhe der Außenstolen und Dicke des Raupengurts oder der Breite der Außenstolen in oder quer zur Fahrtrichtung und Breite des Raupengurts mit in einer Datenbank hinterlegten Sollwerten vergleicht und darüber den aktuellen Verschleißzustand ermittelt.

## Claims

1. A crawler vehicle, in particular an agricultural crawler vehicle (1), with a crawler chassis (2a) with at least one crawler framework (6), wherein the respective crawler framework (6) has at least two chassis wheels (3, 4) and a crawler belt (9) guided over the chassis wheels (3, 4),
**characterized in that**
an evaluation device (13) is provided, which is configured to carry out a determination of the state of wear of at least one crawler belt (9) of the crawler chassis (2a) by means of an image-based comparison of at least two components (10, 11) of the crawler vehicle (1), of which at least one is a component (11) of the crawler belt (9), wherein the respective crawler belt (9) is a moving belt which comprises a crawler webbing (10) and outer studs (11) disposed on the outside of the crawler webbing (10) as the components (10, 11), wherein the evaluation device (13) compares the result of the comparison of a height of the outer studs and thickness of the crawler webbing or the width of the outer studs in or transverse to the direction of travel and width of the crawler webbing with nominal values stored in a database and determines the current state of wear thereon.

2. The crawler vehicle according to claim 1, **characterized in that** the evaluation device (13) is configured to carry out a determination of the state of wear of at least one crawler belt (9) of the crawler chassis (2a) by means of an image-based comparison of at least two components (10, 11) of the crawler belt (9).

3. The crawler vehicle according to claim 1 or claim 2, **characterized in that** one of the at least two components (10, 11) is liable to a smaller amount of wear with respect to its extent in the radial direction, in the direction of travel (L) and/or transversely to the direction of travel (L) than the other component (11) and/or to no wear with respect to its extent in the radial direction, in the direction of travel (L) and/or transversely to the direction of travel (L).

4. The crawler vehicle according to one of the preceding claims, **characterized in that** the evaluation device (13) is configured to compare the thickness and/or width of the crawler webbing (10) with the height and/or width of at least one of the outer studs (11) during the image-based comparison.

5. The crawler vehicle according to one of the preceding claims, **characterized in that** the evaluation device (13) is configured to carry out the image-based comparison on the basis of an image recorded by means of a camera (15) that depicts the at least two components (10, 11) to be compared.

6. The crawler vehicle according to one of the preceding claims, **characterized in that** the evaluation device (13) is a mobile evaluation device (13) and/or a smartphone (14), tablet computer, notebook or the like, and/or **in that** the evaluation device (13) has a keyboard and/or display screen and/or a touch screen.

7. The crawler vehicle according to one of the preceding claims, **characterized in that** the evaluation device (13) is configured to display the recorded image and/or driver information graphically and/or by means of augmented reality.

8. The crawler vehicle according to one of the preceding claims, **characterized in that** virtual lines (16a, 16b, 16c) are inserted into the image as driver information, wherein a first line (16a) extends along the underside of the crawler webbing (10) of the respective crawler belt (9) depicted in the image, a second line (16b) extends along the depicted top side of the crawler webbing (10) of the respective crawler belt (9) and a third line (16c) extends along the top side of one or more of the depicted outer studs (11) of the respective crawler belt (9).

9. The crawler vehicle according to claim 8, **characterized in that** the evaluation device (13) is configured to determine the distance between the underside of the crawler webbing (10) of the respective crawler belt (9) and the top side of the crawler webbing (10) of the respective crawler belt (9) and the distance between the top side of the respective crawler webbing (10) and the top side of one or more of the outer studs (11) of the respective crawler belt (9) and to compare the determined distances with each other, and/or to determine the distance between the first and the second line (16a, 16b) and the distance between the second and the third line (16b, 16c) and to compare the determined distances with each other.

10. The crawler vehicle according to one of the preceding claims, **characterized in that** the evaluation device (13) is configured to determine the height and/or width of the outer studs (11) of the respective crawler belt (9) on the basis of the comparison.

11. The crawler vehicle according to one of the preceding claims, **characterized in that** the respective distance is determined on the basis of pixels and/or the respective distances are compared with each other on the basis of pixels.

12. The crawler vehicle according to one of the preceding claims, **characterized in that** crawler belt-specific data which comprises the original thickness and/or width of the crawler webbing (10) of the respective crawler belt (9) or are suitable for enabling these to be determined by the evaluation device (13) can be input and/or received via the evaluation device (13).

13. The crawler vehicle according to one of the preceding claims, **characterized in that**, as the driver information, at least one graphical representation of a radial cross section of the respective crawler belt (9) is displayed which shows at least one outer stud (11) and an associated section of the crawler webbing (10) and/or at least one of the virtual lines, and/or **in that** the determined height and/or width of the outer studs (11), the state of wear, the remaining service life, are displayed as the driver information.

14. The crawler vehicle according to one of the preceding claims, **characterized in that** the respectively determined distance between the top side of the crawler webbing (10) of the respective crawler belt (9) and the top side of the outer stud or outer studs (11) of the respective crawler belt (9) and/or the respectively determined distance between the second and the third line (16b, 16c) and/or the determined state of wear and/or the respectively determined height of the outer studs (11) are stored or collected in a memory.

15. A method for determining the state of wear and/or service life of at least one crawler belt (9) of a crawler vehicle, in particular crawler vehicle (1) according to one of the preceding claims, wherein at least one at least one crawler framework (6) of a crawler chassis (2a) of the vehicle (1) respectively has at least two chassis wheels (3, 4) and a crawler belt (9) guided over the chassis wheels (3, 4), **characterized in that**
an evaluation device (13) carries out a determination of the state of wear of at least one crawler belt (9) of the crawler chassis (2a) by means of an image-based comparison of at least two components (10, 11) of the crawler vehicle (1), of which at least one is a component (11) of the crawler belt (9),
wherein the respective crawler belt (9) is a moving belt which comprises a crawler webbing (10) and outer studs (11) disposed on the outside of the crawler webbing (10) as the components (10, 11),
wherein the evaluation device (13) compares the result of the comparison of a height of the outer studs and thickness of the crawler webbing or the width of the outer studs in or transverse to the direction of travel and width of the crawler webbing with nominal values stored in a database and determines the current state of wear thereon.

## Revendications

1. Véhicule à chenilles, notamment véhicule à chenilles agricole (1), comprenant un train de roulement de chenille (2a) avec au moins un train de chenille (6), le train de chenille (6) respectif présentant au moins deux roues de train de roulement (3, 4) et une bande de chenille (9) guidée sur les roues de train de roulement (3, 4),
**caractérisé en ce que**
il est prévu un dispositif d'évaluation (13) qui est configuré pour réaliser une détermination de l'état d'usure d'au moins une bande de chenille (9) du train de roulement de chenille (2a), à l'aide d'une comparaison basée sur des images d'au moins deux composants (10, 11) du véhicule à chenilles (1), dont au moins un est un composant de la bande de chenille (9), la bande de chenille (9) respective étant une bande de roulement qui comprend, en tant que composants (10, 11), une courroie de chenille (10) et des crampons extérieurs (11) disposés sur la face extérieure de la courroie de chenille (10),
le dispositif d'évaluation (13) comparant le résultat de la comparaison d'une hauteur des crampons extérieurs et d'une épaisseur de la courroie de chenille ou de la largeur des crampons extérieurs, dans la direction de déplacement ou transversalement à celle-ci, et de la largeur de la courroie de chenille (20) avec des valeurs de consigne enregistrées dans une base de données, et déterminant par ce biais l'état d'usure actuel.

2. Véhicule à chenilles selon la revendication 1, **caractérisé en ce que** le dispositif d'évaluation (13) est configuré pour réaliser une détermination de l'état d'usure d'au moins une bande de chenille (9) du train de roulement de chenille (2a), à l'aide d'une comparaison basée sur des images d'au moins deux composants (10, 11) de la bande de chenille (9).

3. Véhicule à chenilles selon la revendication 1 ou 2, **caractérisé en ce qu'**un des au moins deux composants (10, 11) est soumis à une usure plus faible, rapportée à sa dimension dans la direction radiale, dans la direction de déplacement (L) et/ou transversalement à la direction de déplacement (L), que l'autre composant (11), et/ou n'est soumis à aucune usure, rapportée à sa dimension dans la direction radiale, dans la direction de déplacement (L) et/ou transversalement à la direction de déplacement (L).

4. Véhicule à chenilles selon une des revendications précédentes, **caractérisé en ce que** le dispositif d'évaluation (13) est configuré pour comparer, lors de la comparaison basée sur des images, l'épaisseur et/ou la largeur de la courroie de chenille (10) avec la hauteur et/ou la largeur d'au moins un des crampons extérieurs (11).

5. Véhicule à chenilles selon une des revendications précédentes, **caractérisé en ce que** le dispositif d'évaluation (13) est configuré pour réaliser la comparaison basée sur des images, sur la base d'une image prise avec une caméra (15) et représentant les aux moins deux composants (10, 11) devant être comparés.

6. Véhicule à chenilles selon une des revendications précédentes, **caractérisé en ce que** le dispositif d'évaluation (13) est un dispositif d'évaluation (13) mobile et/ou un smartphone (14), une tablette numérique, un ordinateur portable ou un dispositif analogue, et/ou **en ce que** le dispositif d'évaluation (13) présente un clavier et/ou un écran et/ou un écran tactile.

7. Véhicule à chenilles selon une des revendications précédentes, **caractérisé en ce que** le dispositif d'évaluation (13) est configuré pour afficher l'image prise et/ou pour représenter des informations au conducteur sous une forme graphique et/ou par réalité augmentée.

8. Véhicule à chenilles selon une des revendications précédentes, **caractérisé en ce que** des lignes virtuelles (16a, 16b, 16c) sont insérées dans l'image en tant qu'information au conducteur, une première ligne (16a) s'étendant le long de la face inférieure de la courroie de chenille (10) de la bande de chenille (9) respective, représentée dans l'image, une deuxième ligne (16b) s'étendant le long de la face supérieure représentée de la courroie de chenille (10) de la bande de chenille (9) respective, et une troisième ligne (16c) s'étendant le long de la face supérieure d'un ou plusieurs crampons extérieurs (11) représentés de la bande de chenille (9) respective.

9. Véhicule à chenilles selon la revendication 8, **caractérisé en ce que** le dispositif d'évaluation (13) est configuré pour déterminer la distance entre la face inférieure de la courroie de chenille (10) de la bande de chenille (9) respective et la face supérieure de la courroie de chenille (10) de la bande de chenille (9) respective, et la distance entre la face supérieure de la courroie de chenille (10) respective et la face supérieure d'un ou plusieurs crampons extérieurs (11) de la bande de chenille (9) respective, et pour comparer entre elles les distances déterminées et/ou pour déterminer la distance entre la première et la deuxième ligne (16a, 16b) et la distance entre la deuxième et la troisième ligne (16b, 16c) et comparer entre elles les distances déterminées.

10. Véhicule à chenilles selon une des revendications précédentes, **caractérisé en ce que** le dispositif d'évaluation (13) est configuré pour déterminer, sur la base de la comparaison, la hauteur et/ou la largeur des crampons extérieurs (11) de la bande de chenille (9) respective.

11. Véhicule à chenilles selon une des revendications précédentes, **caractérisé en ce que** la distance respective est déterminée sur la base de pixels et/ou que les distances respectives sont comparées entre elles sur la base de pixels.

12. Véhicule à chenilles selon une des revendications précédentes, **caractérisé en ce que** le dispositif d'évaluation (13) permet de saisir et/ou de recevoir des données spécifiques à la bande de chenille, qui comprennent l'épaisseur et/ou la largeur initiale de la courroie de chenille (10) de la bande de chenille (9) respective ou sont adaptées pour faire déterminer ces valeurs par le dispositif d'évaluation (13).

13. Véhicule à chenilles selon une des revendications précédentes, **caractérisé en ce qu'**est affichée en tant qu'information au conducteur, au moins une représentation graphique d'une section radiale de la bande de chenille (9) respective, qui montre au moins un crampon extérieur (11) et une partie associé de la courroie de chenille (10) et/ou au moins une des lignes virtuelles, et/ou **en ce qu'**est affichée en tant qu'information au conducteur, la hauteur et/ou la largeur déterminée des crampons extérieurs (11), l'état d'usure, la durée de vie restante.

14. Véhicule à chenilles selon une des revendications précédentes, **caractérisé en ce que** la distance respective déterminée entre la face supérieure de la courroie de chenille (10) de la bande de chenille (9) respective et la face supérieure du ou des crampons extérieurs (11) de la bande de chenille (9) respective et/ou la distance respective déterminée entre la deuxième et la troisième ligne (16b, 16c) et/ou l'état d'usure déterminé et/ou la hauteur respective déterminée des crampons extérieurs (11) sont enregistrés dans une mémoire ou sont collectés.

15. Procédé de détermination de l'état d'usure et/ou de la durée de vie d'au moins une bande de chenille (9) d'un véhicule à chenilles, notamment d'un véhicule à chenilles (1) selon une des revendications précédentes, où au moins un train de chenille (6) d'un train de roulement de chenille (2a) du véhicule (1) présente respectivement au moins deux roues de train de roulement (3, 4) et une bande de chenille (9) guidée sur les roues de train de roulement (3, 4),
**caractérisé en ce que**
un dispositif d'évaluation (13) réalise une détermination de l'état d'usure d'au moins une bande de chenille (9) du train de roulement de chenille (2a), à l'aide d'une comparaison basée sur des images d'au moins deux composants (10, 11) du véhicule à chenilles (1), dont au moins un est un composant (11) de la bande de chenille (9),
la bande de chenille (9) respective étant une bande de roulement qui comprend, en tant que composants (10, 11), une courroie de chenille (10) et des crampons extérieurs (11) disposés sur la face extérieure de la courroie de chenille (10),
le dispositif d'évaluation (13) comparant le résultat de la comparaison d'une hauteur des crampons extérieurs et d'une épaisseur de la courroie de chenille ou de la largeur des crampons extérieurs, dans la direction de déplacement ou transversalement à celle-ci, et de la largeur de la courroie de chenille avec des valeurs de consigne enregistrées dans une base de données, et déterminant par ce biais l'état d'usure actuel.
